# EUROPÄISCHE PATENTSCHRIFT

(11) **EP 3 981 633 B1**
(45) Veröffentlichungstag und Bekanntmachung des Hinweises auf die Patenterteilung: **11.03.2026**
(21) Anmeldenummer: 21196084.4
(22) Anmeldetag: 10.09.2021
(51) Int. Cl.: B60K 7/00

(54) **ANTRIEBS- UND LENKEINHEIT FÜR FLURFÖRDERFAHRZEUGE**
DRIVING AND STEERING UNIT FOR INDUSTRIAL TRUCKS
UNITÉ D'ENTRAÎNEMENT ET DE DIRECTION POUR CHARIOTS DE MANUTENTION

(30) Priorität: 12.10.2020 DE 102020126719
(43) Veröffentlichungstag der Anmeldung: 13.04.2022
(73) Patentinhaber: Kordel Antriebstechnik GmbH, 48249 Dülmen (DE)
(72) Erfinder: Raue, Josef, 48249 Dülmen (DE)
(74) Vertreter: Seyer & Nobbe Patentanwälte PartmbB

(56) Entgegenhaltungen:
- EP-A1- 1 946 952
- CN-A- 108 216 422
- DE-A1- 102009 047 730
- US-A1- 2017 101 005

## Beschreibung

Die Erfindung betrifft eine Anordnung einer Antriebs- und Lenkeinheit für Fahrzeuge, insbesondere Flurförderfahrzeuge, zur Befestigung an einem Fahrzeugchassis, umfassend zumindest ein Drehkranzlager mit zumindest einem Antriebsmotors und wenigstens einer Getriebestufe, wobei das Drehkranzlager horizontal ausgerichtet mit dem Fahrzeugchassis verbunden ist.

Gattungsgemäße Antriebs- und Lenkeinheiten werden vorrangig für Flurförderfahrzeuge eingesetzt, um den Transport von Waren und Gütern zu realisieren. Als Flurförderfahrzeuge sind beispielsweise Gabelstapler bekannt, welche mithilfe der Gabeln Paletten anheben und transportieren können und zu diesem Zweck im hinteren Fahrzeugbereich eine Antriebs- und Lenkeinheit aufweisen. Der Antrieb erfolgt hierbei über ein Laufrad, welches über ein Getriebe durch einen Elektromotor angetrieben wird und über ein Drehkranzlager mit dem Fahrzeugchassis verbunden ist. Hinzu kommt ein Lenkmotor, welcher den Lenkausschlag der Getriebeeinheit mit Laufrad bewirkt. Durch das Drehkranzlager besteht die Möglichkeit, das Laufrad um 360 Grad zu drehen, sodass ein sehr kleiner Wendekreis erzielt wird. Dieser Wendekreis ist von Vorteil, wenn beispielsweise ein Gabelstapler zwischen Regalen hin- und herfahren muss, um die Waren einzulagern oder zum Weitertransport aufzunehmen.

Die bekannten Antriebs- und Lenkeinheiten für Flurförderfahrzeuge sind in derart konstruiert, dass das Drehkranzlager über den inneren Drehkranz mit dem Getriebe und Laufrad verbunden ist, während der Antriebsmotor oberhalb des Drehkranzlagers aufgesetzt ist. Um eine Verbindung zwischen Antriebsmotor und Getriebe zu ermöglichen, weist das Drehkranzlager einen größeren Durchbruch auf, sodass der Antriebsmotor beispielsweise mit dem Drehkranzlagerinnenring verbunden werden kann und bei einer Drehung des Laufrades ebenfalls mitgedreht wird.

Diese Bauweise eignet sich ohne weiteres für den Einbau von Gabelstaplern, weil ausreichender vertikaler Bauraum zur Verfügung steht.

Die Gabelstapler sollen aber in vielen Fällen durch selbstfahrende Flurförderfahrzeuge ersetzt werden, welche möglichst flachbauend zum Transport von Waren eingesetzt werden. Hierzu ist es bekannt das Chassis eines solchen Fahrzeuges mit einer Montageplatte zu verbinden, auf der sowohl ein Antriebsmotor mit Getriebe als auch ein Lenkmotor separat montiert sind. Für derartige Antriebe wird kein Drehkranzlager eingesetzt, sondern über den Lenkmotor die Fahrtrichtung für das Laufrad durch einen antreibbaren Zahnkranz vorgegeben. Die einzelnen Komponenten sind mit der Montageplatte separat verbunden und es wird nur das erforderliche Drehmoment des Lenkmotors und des Antriebsmotors über geeignete Mittel übertragen. Als nachteilig ist hierbei anzusehen, dass die Montageplatte mit den Komponenten relativ viel Platz benötigt, welcher anderweitig genutzt werden kann, beispielsweise durch die mitzuführende Batterie.

Aus der EP 1 946 952 A1 ist eine Antriebseinheit bekannt, welche eine Anordnung des Antriebsmotors und des Lenkmotors unterhalb des Drehkranzlagers vorsieht, wobei der Antriebsmotor horizontal ausgerichtet ist. Durch den querliegenden Antriebsmotor ist ein erhöhter Bauraum mit einem größeren Hüllkreis erforderlich, wodurch die Einbaumöglichkeiten begrenzt sind.

Aus der CN 108 216 422 A ist eine Antriebseinheit für Flurförderfahrzeuge bekannt, welche in einem Gehäuse ein angetriebenes Laufrad aufweist und ein unterhalb des Gehäuses angeflanschten Antriebsmotor für die Lenkbewegung. Derartige Antriebe sind für selbstfahrende Flurförderfahrzeuge vorgesehen, wobei beispielsweise vier derartige Antriebe zum Einsatz kommen.

Der vorliegenden Erfindung liegt die Aufgabe zugrunde eine neuartige Antriebs- und Lenkeinheit zur Verfügung zu stellen, welche eine möglichst geringe Bauhöhe aufweist und zudem wenig Platz unterhalb der Transportfläche eines solchen Flurförderfahrzeuges benötigt.

Erfindungsgemäß ist zur Lösung der Aufgabenstellung vorgesehen, dass der Antriebsmotor mit seiner Drehachse und wenigstens einer Getriebestufe unterhalb und rechtwinklig zum Drehkranzlager angeordnet ist und das Motorschild des Antriebsmotors parallel zum Drehkranzlager liegend gleichzeitig den oberen Deckel des Getriebegehäuses bildet. Vorteilhafte Ausgestaltungen der Erfindung sind in den Unteransprüchen offenbart.

Durch die Montage des Drehkranzlagers mit dem Fahrzeugchassis, wobei vorzugsweise der Drehkranzlageraußenring verwendet wird und der Anordnung des Antriebsmotors mit wenigstens eine Getriebestufe vertikal unterhalb des Drehkranzlagers kann die Bauhöhe einer solchen Antriebs- und Lenkeinheit erheblich reduziert werden. Die erforderlichen Komponenten für die Antriebs- und Lenkeinheit können bei der erfindungsgemäßen Lösung sämtliche unterhalb des Drehkranzlagers angeordnet werden, sodass oberhalb des Drehkranzlagers die erforderliche Auflagefläche für die für den Transport vorzusehenden Waren zur Verfügung steht. Mithilfe des Drehkranzlagers wird darüber hinaus eine größere Beweglichkeit des Fahrzeuges erreicht, weil dieses sich auch ohne weiteres in engen Gängen oder Fahrwegen bewegen kann und darüber hinaus einen kleinen Wendekreis mit sich bringt, weil der Antriebsmotor mit Laufrad unmittelbar über das Drehkranzlager in die gewünschte Richtung gelenkt wird.

Das Motorschild des Antriebsmotors bildet gleichzeitig den oberen Deckel des Getriebegehäuses, sodass die Baugröße verringert werden kann und zudem die Anzahl der Einzelkomponenten einer Antriebs- und Lenkeinheit reduziert wird.

Um die Größe der Baueinheit im weiteren zu verringern ist in Ausgestaltung der Erfindung vorgesehen, dass der Antriebs- und Lenkmotor ein gemeinsames Motorschild aufweisen, sodass beide Motoren unmittelbar miteinander verbunden sind, wobei das Motorschild des Antriebs- und Lenkmotors gleichzeitig den oberen Abschluss des Getriebegehäuses bilden kann. Auf diese Weise liegt eine direkte Verbindung des Antriebsmotors und Lenkmotors mit dem Getriebegehäuse vor, wodurch eine kompakte Baueinheit entsteht und der Montageaufwand erheblich reduziert wird. Es besteht aber trotzdem die Möglichkeit alternativ sowohl den Antriebs- als auch den Lenkmotor im Falle einer Reparatur einzeln auszutauschen.

In Ausgestaltung der Erfindung ist vorgesehen, dass der Drehkranzlageraußenring mit dem Fahrzeugchassis verbunden ist und der Drehkranzlagerinnenring mit dem Motorschild, wobei in einer bevorzugten Ausführungsform der Drehkranzlagerinnenring als Motorschild ausgebildet sein kann.

In weiterer Ausgestaltung der Erfindung ist vorgesehen, dass der Antriebsmotor seitlich neben der mindestens einen Getriebestufe angeflanscht ist, um die Baueinheit zu verkleinern, wobei im weiteren auch ein Lenkmotor in vertikaler Ausrichtung neben dem Antriebsmotor angeordnet werden kann. Durch die Anordnung von Antriebs- und Lenkmotor unmittelbar neben der Getriebestufe und somit gegenüberliegend zum Laufrad wird eine äußerst kompakte Baueinheit geschaffen, die ohne einen großen Platzbedarf unterhalb des Fahrzeuges montiert werden kann. Die erforderliche Lenkbewegung wird hierbei unmittelbar durch den Lenkmotor auf den ortsfesten Drehkranzaußenring übertragen, sodass eine direkte und schnell ansprechende Lenkbewegung erzielt wird.

In weiterer Ausgestaltung der Erfindung ist vorgesehen, dass der Antriebs- und Lenkmotor auf einer Seite der wenigstens einen Getriebestufe und davon diametral abgewandt das Laufrad angeordnet ist. Zwischen dem Laufrad und dem Antriebs- und Lenkmotor befindet sich somit die Getriebestufe, sodass das Laufrad auf der einen Seite unmittelbar mit der Getriebestufe verbunden werden kann, während demgegenüber der Antriebs- und Lenkmotor auf der anderen Seite der Getriebestufe angeordnet ist. Durch diese Maßnahme wird der Austausch des Laufrades wesentlich vereinfacht, weil weder der Antriebsmotor noch der Lenkmotor vorher demontiert werden muss.

In einer alternativen Ausführung ist ferner vorgesehen, dass zwischen Motorschild und Drehkranzlagerinnenring eine Montageplatte angeordnet ist. Die Montageplatte dient hierbei dazu weitere gegebenenfalls erforderliche Komponenten zu befestigen, wobei die Montageplatte insbesondere zur Aufnahme zumindest eines Sensors vorgesehen ist, um den Lenkwinkel zu erfassen. Da es sich um ein selbstfahrendes Fahrzeug handelt und kein Fahrzeugführer vorhanden ist, besteht die Notwendigkeit einer Kontrollfunktion, um beispielsweise den Lenkwinkel zu erfassen, damit über eine entsprechende Steuerung korrigierend eingegriffen werden kann. Die selbstfahrenden Fahrzeuge werden hierbei beispielsweise über induktive Kontaktflächen gesteuert, wobei mithilfe eines induktiven Sensors die erforderliche Fahrtrichtung erfasst wird und über den Lenksensor zur Erfassung des Lenkwinkels eine Kontrolle vorgenommen werden kann, inwieweit das Laufrad und der Lenkwinkel des Laufrades mit der erforderlichen Fahrtrichtung übereinstimmt. Auf diese Weise kann somit jedes einzelne Fahrzeug mit hoher Genauigkeit auf der vorgesehen Fahrtroute gehalten werden, wobei im Hintergrund über eine EDV-Anlage und Funkverbindung jedes einzelne Fahrzeug erfasst, kontrolliert und gesteuert werden kann.

In Ausgestaltung der Erfindung ist vorgesehen, dass der Antriebsmotor über ein Antriebsritzel ein Stirnrad als erste Getriebestufe antreibt, wobei das Stirnrad mit einer Antriebswelle verbunden ist, welche anderenends eine Schrägverzahnung aufweist, welche mit einer weiteren Schrägverzahnung als zweite Antriebsstufe mit einer Hohlwelle kämmt, wobei die zweite Antriebsstufe unmittelbar mit dem Laufrad gekoppelt ist. Somit liegt nur eine einzelne vertikal verlaufende Antriebswelle vor, welche einenends durch das Antriebsritzel und das Stirnrad angetrieben wird und anderenends über die Schrägverzahnung den Antrieb des Laufrades ermöglicht.

In weiterer Ausgestaltung der Erfindung ist vorgesehen, dass der Lenkmotor mit einem Ritzel mit dem Drehkranzlageraußenring kämmt, welcher mit dem Fahrzeugchassis verbunden ist. Das Stirnrad und der Drehkranzlagerinnenring können in diesem Fall eine Baueinheit bilden, die fest mit dem Fahrzeugchassis verbunden ist, sodass mithilfe des Antriebsritzels und des Lenkmotors der Drehkranzlagerinnenring mit Getriebe, Antriebsmotor und Laufrad in jede beliebige Richtung gesteuert werden kann.

In weiterer Ausgestaltung ist vorgesehen, dass die elektrischen Anschlusskabel des Antriebs- und Lenkmotors durch das Drehkranzlager in das Fahrzeugchassis hineingeführt werden und mit der erforderlichen Steuerungseinheiten und insbesondere einer Spannungsversorgungsquelle verbunden werden.

Die Besonderheit der vorliegenden Erfindung besteht darin, dass eine kompakte Baueinheit für eine Antriebs- und Lenkeinheit geschaffen wird, die zum Antrieb selbstfahrender Fahrzeuge, insbesondere Flurförderfahrzeuge vorgesehen ist. Durch die kompakte Bauweise mit unterhalb eines Drehkranzlagers angeordneten Antriebsmotor und Lenkmotor sowie Getriebeeinheit und Laufrad wird erreicht, dass die Transportfläche des Fahrzeuges über die gesamte Länge und Breite voll genutzt werden kann und keine Beeinträchtigung beim Transport von Waren vorliegt. Hierbei ist es von besonderem Vorteil, dass der Antriebsmotor für das Laufrad und der Lenkmotor seitlich am Getriebe angeflanscht, aber demontierbar sind, und zwar gegenüberliegend zum Laufrad, sodass die Demontage einzelner Komponenten einschließlich des Laufrades jederzeit erfolgen kann, wobei insbesondere ein Austausch des Laufrades oder der Laufradbereifung jederzeit möglich ist ohne dass eine umfangreiche Demontage vorgenommen werden muss.

Die Erfindung wird im Weiteren anhand der Figuren näher erläutert.

Es zeigt
- Fig. 1: in einer perspektivischen Ansicht eine Antriebs- und Lenkeinheit für ein Flurförderfahrzeug,
- Fig. 2: in einer Draufsicht die Antriebs- und Lenkeinheit mit Angabe der Schnitte,
- Fig. 3: ein Schnitt durch die Antriebs- und Lenkeinheit gemäß Figur 2 entlang der Schnittlinie A-A,
- Fig. 4: einen Schnitt durch die Antriebs- und Lenkeinheit gemäß Figur 2 entlang der Schnittlinie B-B und
- Fig. 5: einen Schnitt durch die Antriebs- und Lenkeinheit gemäß Figur 2 entlang der Schnittlinie C-C.

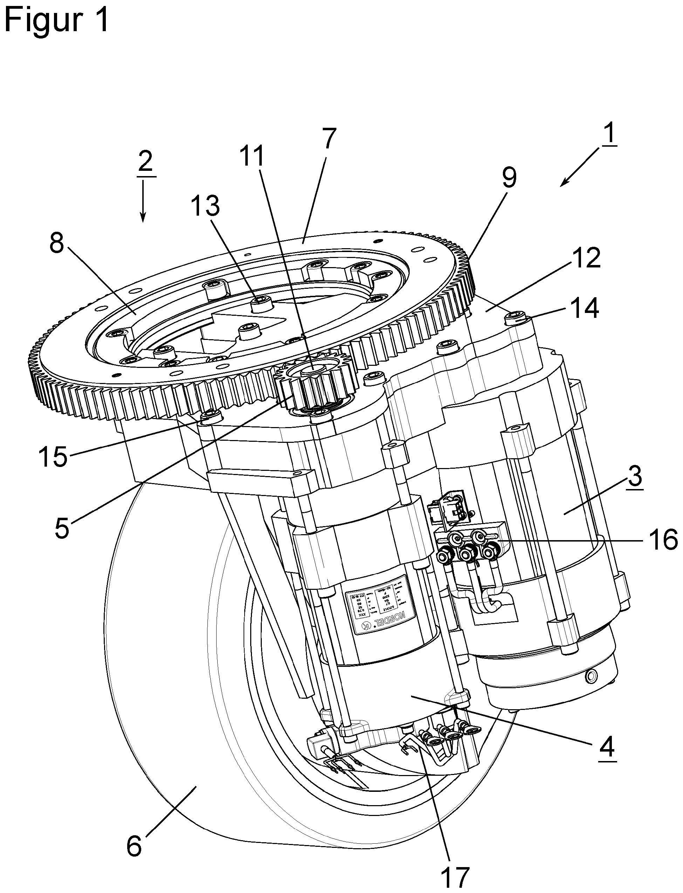

Figur 1 zeigt in einer perspektivischen Ansicht die Antriebs- und Lenkeinheit 1, bestehend aus einem Drehkranzlager 2, einem Antriebsmotor 3 und einem Lenkmotor 4. Über den Antriebsmotor 3 und ein Getriebe wird ein Laufrad 6 angetrieben.

Das Drehkranzlager 2 besteht aus einem Drehkranzlageraußenring 7 und Drehkranzlagerinnenring 8. Der Drehkranzlageraußenring wird mit einem nicht dargestellten Chassis des Flurförderfahrzeuges verbunden und besitzt am Außenumfang einen Zahnkranz 9, welcher mit einem Ritzel 5 kämmt, das auf der Welle 11 des Lenkmotors 4 angebracht ist. Somit kann durch den Lenkmotor 4 und das Ritzel 5 die gesamte Antriebsanordnung um 360 Grad bewegt werden. Der Drehkranzlagerinnenring 8 dient demgegenüber zur Befestigung des Antriebsmotors 3, Lenkmotors 4 und Getriebe an dem das Laufrad 10 befestigt ist. Im gezeigten Ausführungsbeispiel erfolgt die Verbindung zwischen dem Drehkranzlagerinnenring über ein Motorschild 12 durch eine Verschraubung 13, wobei der Antriebsmotor 3 über eine Verschraubung 14 und der Lenkmotor 4 über eine Verschraubung 15 mit dem Motorschild 12 verbunden ist. Zudem ist das Getriebe, aus den späteren Ansichten besser erkennbar, ebenfalls mit dem Motorschild 12 verbunden, in Folge dessen liegt eine kompakte Baueinheit vor, welche durch die Geometrie und Anordnung des Antriebsmotors 3 und Lenkmotors 4 unterhalb eines Flurförderfahrzeuges montiert werden kann. Aus dieser Ansicht sind im weiteren die Anschlussklemmen 16 des Antriebsmotors 3 sowie die Anschlussklemmen 17 des Lenkmotors 4 ersichtlich. Die Stromzuführung des Antriebsmotors 3 und Lenkmotors 4 erfolgt durch eine Kabelverbindung durch das Drehkranzlager 2 hindurch bis zum Fahrzeugchassis des Flurförderfahrzeuges.

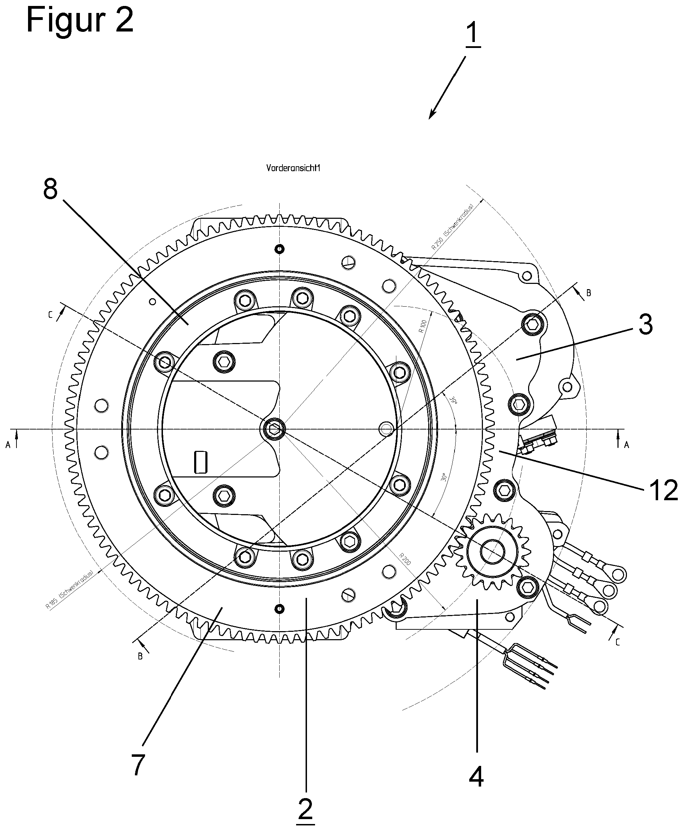

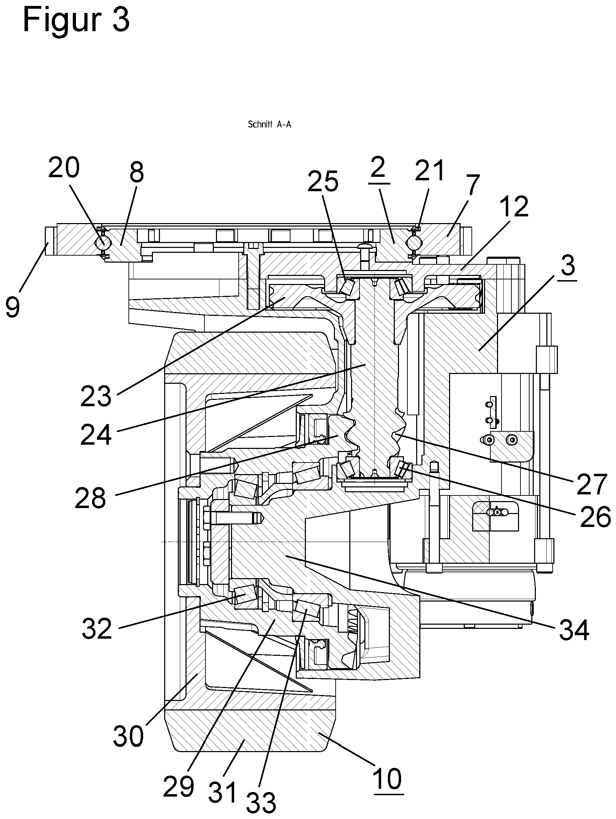

Figur 2 zeigt in einer Draufsicht die Antriebs- und Lenkeinheit 1 mit Blick auf das Drehkranzlager 2, bestehend aus dem Drehkranzlageraußenring 7 und dem Drehkranzlagerinnenring 8. Seitlich ist der Antriebsmotor 3 und der Lenkmotor 4 über das Motorschild 12 angeflanscht. Ferner sind aus dieser Darstellung die Schnittlinien gemäß den Figuren 3 bis 5 ersichtlich.

Figur 3 zeigt einen Schnitt durch die Antriebs- und Lenkeinheit 1 gemäß der Verbindungslinie A-A. Im oberen Bereich befindet sich das Drehkranzlager 2 mit Drehkranzlageraußenring 7 und Drehkranzlagerinnenring 8, welche über ein Lagerelement 20 gegenseitig abgestützt sind, wobei die Lagerelemente 20 mit Dichtungselementen 21 zusätzlich abgedichtet sind. Der Schnitt verläuft in diesem Falle durch den Mittelpunkt des Drehkranzlagers 2, sodass von dem Antriebsmotor 3 die Außenkontur ersichtlich ist. Der Antriebsmotor 3 ist über das Motorschild 12 angeflanscht, wobei das Motorschild 12 ebenso zur Befestigung des Getriebegehäuses verwendet wird. Das Getriebe besteht in einer ersten Antriebsstufe aus einem Stirnrad 23, welches von einem Stirnradritzel des Antriebsmotors 3 angetrieben wird. Das Stirnradritzel ist aus dieser Schnittdarstellung nicht ersichtlich. Das Stirnrad 23 sitzt drehfest auf einer Antriebswelle 24, welche durch Lagerelemente 25 im oberen Bereich und Lagerelemente 26 im unteren Bereich abgestützt ist. Diametral entgegengesetzt zum Stirnrad 23 ist die Antriebswelle 24 mit einer Schrägverzahnung 27 ausgestattet, welche unmittelbar mit einer weiteren Schrägverzahnung 28 kämmt. Die Schrägverzahnung 28 ist Bestandteil einer Hohlwelle 29, welche zur Aufnahme des Laufrades 10 dient. Das Hohlrad 29 ist in diesem Falle durch Lagerelemente 32, 33 gegenüber einem Getriebestutzen 34 abgestützt, welcher einstückig mit dem Getriebegehäuse verbunden ist beziehungsweise Bestandteil des Getriebegehäuses ist. Das Laufrad 10 besteht aus einer Felge 30 und einer Bereifung 31. Sowohl der Antriebsmotor 3 wie auch der aus dieser Ansicht nicht ersichtliche Lenkmotor 4 und das Getriebe ist über das Motorschild 12 fest mit dem Drehkranzlagerinnenring 8 verbunden, sodass eine Lenkbewegung des Lenkmotors 4 über den äußeren Zahnkranz 9 des Drehkranzlageraußenringes 7 sofort zu einer Drehbewegung der gesamten Antriebs- und Lenkeinheit 1 gegenüber dem Fahrzeugchassis führt. Der Vorteil dieser Anordnung besteht darin, dass ein Laufradwechsel 10 ohne Demontage des Antriebsmotors 3 oder Lenkmotor 4 erfolgen kann, weil das Laufrad 10 auf einer Seite der Getriebestufe angeordnet ist und der Antriebsmotor 3 sowie der Lenkmotor 4 auf der gegenüberliegenden Seite. Zudem kommt hinzu, dass durch die Verwendung eines gemeinsamen Motorschildes unter anderem auch für das Getriebe eine äußerst kompakte Baueinheit vorliegt, die einen nur geringen Platzbedarf benötigt.

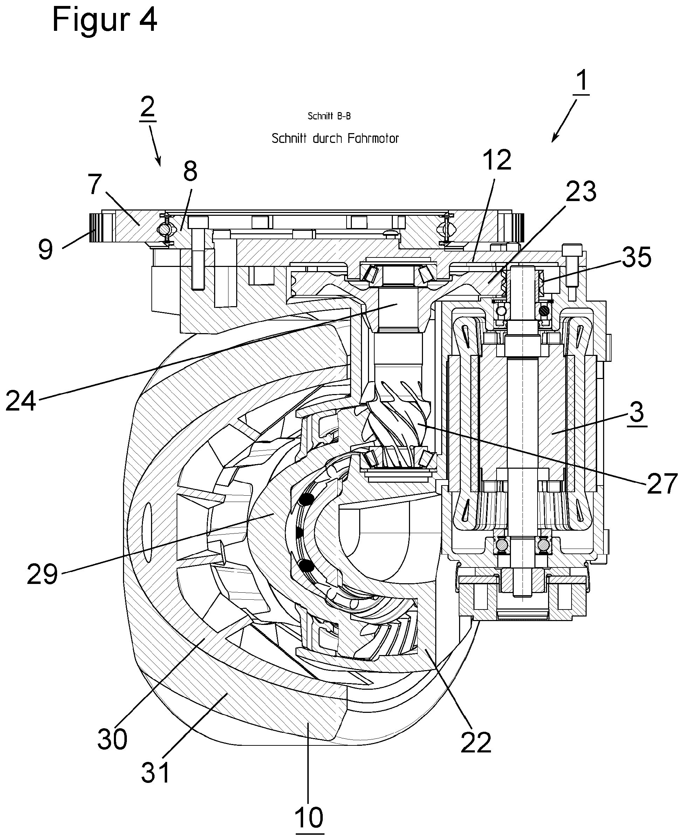

Figur 4 zeigt einen Schnitt durch die Antriebs- und Lenkeinheit 1 gemäß der Schnittlinie B-B. Der Schnitt verläuft gemäß Figur 2 in diesem Fall versetzt zum Mittelpunkt des Drehkranzlagers 2 durch den Antriebsmotor 3. Aus diesem Grunde ist der Antriebsmotor 3 vollständig dargestellt und ein Ritzel 35 des Antriebsmotors 3 erkennbar, welches mit dem Stirnrad 23 der Getriebestufe kämmt. Die Getriebestufe mit Stirnrad 23, Antriebswelle 24 und Schrägverzahnung 27, welche mit einem Hohlrad 29 kämmt entspricht der Beschreibung gemäß Figur 3, wobei durch die Schnittführung die Darstellung gegenüber der Drehachse des Hohlrades schräg verläuft. Der Antriebsmotor 3 besteht aus einem handelsüblichen Elektromotor.

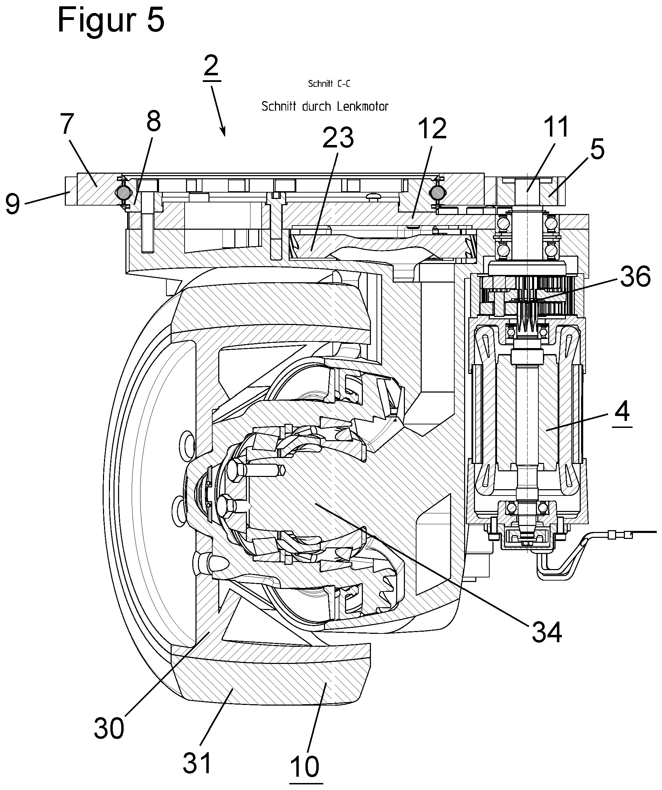

Figur 5 zeigt einen Schnitt durch die Antriebs- und Lenkeinheit 1 gemäß der Verbindungslinie C-C durch den Mittelpunkt des Drehkranzlagers 2 und des Lenkmotors 4. Der Aufbau der Getriebestufe entspricht der bisherigen Darstellung gemäß den Figuren 3 und 4, wobei wiederum durch die Schnittführung die Getriebestufen und das Laufrad schräg geschnitten worden sind, während demgegenüber der Lenkmotor 4 mit Antriebswelle 11 und einem Ritzel 5 erkennbar sind. Das Ritzel 5 kämmt hierbei mit dem Zahnkranz 9 des Drehkranzlageraußenringes 7 um die Lenkbewegung auszuführen. Der Lenkmotor 4 selbst besteht aus einem handelsüblichen Elektromotor, welcher in diesem Fall mit einem Planetengetriebe 36 ausgestattet ist.

### Bezugszeichenliste

- 1: Antriebs- und Lenkeinheit
- 2: Drehkranzlager
- 3: Antriebsmotor
- 4: Lenkmotor
- 5: Ritzel
- 6: Laufrad
- 7: Drehkranzlageraußenring
- 8: Drehkranzlagerinnenring
- 9: Zahnkranz
- 10: Laufrad
- 11: Welle
- 12: Motorschild
- 13: Verschraubung
- 14: Verschraubung
- 15: Verschraubung
- 16: Anschlussklemmen
- 17: Anschlussklemmen
- 20: Lagerelement
- 21: Dichtungselement
- 23: Stirnrad
- 24: Antriebswelle
- 25: Lagerelement
- 26: Lagerelement
- 27: Schrägverzahnung
- 28: Schrägverzahnung
- 29: Hohlwelle
- 30: Felge
- 31: Bereifung
- 32: Lagerelement
- 33: Lagerelement
- 34: Getriebestutzen
- 35: Ritzel
- 36: Planetengetriebe

## Patentansprüche

1. Anordnung einer Antriebs- und Lenkeinheit (1) für Fahrzeuge, insbesondere Flurförderfahrzeuge, zur Befestigung an einem Fahrzeugchassis, umfassend zumindest ein Drehkranzlager (2) mit zumindest einem Antriebsmotor (3) und wenigstens einer Getriebestufe, wobei das Drehkranzlager (2) horizontal ausgerichtet mit dem Fahrzeugchassis verbunden ist,
**dadurch gekennzeichnet,**
**dass** der Antriebsmotor (3) mit seiner Drehachse und wenigstens einer Getriebestufe unterhalb und rechtwinklig zum Drehkranzlager (2) angeordnet ist und das Motorschild (12) des Antriebsmotors parallel zum Drehkranzlager (2) liegend gleichzeitig den oberen Deckel des Getriebegehäuses bildet.

2. Antriebs- und Lenkeinheit (1) nach Anspruch 1,
**dadurch gekennzeichnet,**
**dass** der Antriebs- (3) und Lenkmotor (4) ein gemeinsames Motorschild (12) aufweisen und das Motorschild (12) gleichzeitig den oberen Deckel des Getriebegehäuses bildet.

3. Antriebs- und Lenkeinheit (1) nach Anspruch 1 oder 2,
**dadurch gekennzeichnet,**
**dass** ein Drehkranzlageraußenring (7) mit dem Fahrzeugchassis verbunden ist und ein Drehkranzlagerinnenring (8) mit dem Motorschild (12), oder dass ein Drehkranzlagerinnenring (8) als Motorschild (12) vorgesehen ist.

4. Antriebs- und Lenkeinheit (1) nach einem der Ansprüche 1 bis 3,
**dadurch gekennzeichnet,**
**dass** der Antriebsmotor (3) seitlich neben der mindestens einen Getriebestufe angeflanscht ist, und/oder dass ein Lenkmotor (4) in vertikaler Ausrichtung neben dem Antriebsmotor (3) angeordnet ist.

5. Antriebs- und Lenkeinheit (1) nach einem der Ansprüche 1 bis 4,
**dadurch gekennzeichnet,**
**dass** der Antriebs- (3) und Lenkmotor (4) auf einer Seite der wenigstens einen Getriebestufe angeordnet ist und davon diametral abgewandt das Laufrad (10) angeordnet ist.

6. Antriebs- und Lenkeinheit (1) nach einem der Ansprüche 1 bis 5,
**dadurch gekennzeichnet,**
**dass** zwischen Motorschild (12) und Drehkranzlagerinnenring (8) eine Montageplatte angeordnet ist.

7. Antriebs- und Lenkeinheit (1) nach Anspruch 6,
**dadurch gekennzeichnet,**
**dass** die Montageplatte zur Aufnahme zumindest eines Sensors vorgesehen ist, um einem Lenkwinkel zu erfassen.

8. Antriebs- und Lenkeinheit (1) nach einem der Ansprüche 1 bis 7,
**dadurch gekennzeichnet,**
**dass** der Antriebsmotor (3) über ein Antriebsritzel (35) ein Stirnrad (23) als erste Getriebestufe antreibt, wobei das Stirnrad (23) mit einer Antriebswelle (24) drehfest verbunden ist, welche anderenends eine Schrägverzahnung (27) aufweist, welche mit einer weiteren Schrägverzahnung (28) einer Hohlwelle (29) als zweite Antriebsstufe kämmt.

9. Antriebs- und Lenkeinheit (1) nach einem oder mehreren der Ansprüche 1 bis 8,
**dadurch gekennzeichnet,**
**dass** die zweite Antriebsstufe unmittelbar über die Hohlwelle (29) mit dem Laufrad (10) gekoppelt ist.

10. Antriebs- und Lenkeinheit (1) nach einem oder mehreren der Ansprüche 1 bis 9,
**dadurch gekennzeichnet,**
**dass** der Lenkmotor (4) über ein Ritzel (5) mit dem Drehkranzlageraußenring (7) kämmt, welcher mit dem Fahrzeugchassis verbunden ist.

11. Antriebs- und Lenkeinheit (1) nach einem oder mehreren der Ansprüche 1 bis 10,
**dadurch gekennzeichnet,**
**dass** die elektrischen Anschlusskabel des Antriebs- (3) und Lenkmotors (4) durch das Drehkranzlager (2) in das Fahrzeugchassis geführt sind.

12. Verwendung einer Antriebs- und Lenkeinheit (1) nach einem der Ansprüche 1 bis 11 für ein Flurförderfahrzeug.

## Claims

1. Arrangement of a drive and steering unit (1) for vehicles, in particular industrial trucks, for attachment to a vehicle chassis, comprising at least one slewing ring bearing (2) with at least one drive motor (3) and at least one gear stage, wherein the slewing ring bearing (2) is connected to the vehicle chassis in a horizontally aligned manner, **characterized in that** the drive motor (3) is arranged with its axis of rotation and at least one gear stage below and at right angles to the slewing ring bearing (2), and the motor shield (12) of the drive motor, lying parallel to the slewing ring bearing (2), simultaneously forms the upper cover of the gearbox housing.

2. Drive and steering unit (1) according to claim 1, **characterized in that** the drive motor (3) and steering motor (4) have a common motor shield (12) and the motor shield (12) simultaneously forms the upper cover of the gearbox housing.

3. Drive and steering unit (1) according to any one of claims 1 or 2, **characterized in that** a slewing ring outer ring (7) is connected to the vehicle chassis and a slewing ring inner ring (8) is connected to the motor shield (12), or that a slewing ring inner ring (8) is provided as the motor shield (12).

4. Drive and steering unit (1) according to any one of claims 1 to 3, **characterized in that** the drive motor (3) is flanged laterally adjacent to the at least one transmission stage, and/or that a steering motor (4) is arranged in vertical alignment adjacent to the drive motor (3).

5. Drive and steering unit (1) according to any one of claims 1 to 4, **characterized in that** the drive motor (3) and steering motor (4) are arranged on one side of the at least one transmission stage and the impeller (10) is arranged diametrically opposite them.

6. Drive and steering unit (1) according to any one of claims 1 to 5, **characterized in that** a mounting plate is arranged between the motor shield (12) and the inner ring (8) of the slewing ring bearing.

7. Drive and steering unit (1) according to claim 6, **characterized in that** the mounting plate is provided for accommodating at least one sensor for detecting a steering angle.

8. Drive and steering unit (1) according to any one of claims 1 to 7, **characterized in that** the drive motor (3) drives a spur gear (23) as a first gear stage via a drive pinion (35), wherein the spur gear (23) is connected in a rotationally fixed manner to a drive shaft (24) at one end, which has helical teeth (27) at the other end, which mesh with further helical teeth (28) of a hollow shaft (29) as a second drive stage.

9. Drive and steering unit (1) according to one or more of claims 1 to 8, **characterized in that** the second drive stage is coupled directly to the impeller (10) via the hollow shaft (29).

10. Drive and steering unit (1) according to one or more of claims 1 to 9, **characterized in that** the steering motor (4) meshes via a pinion (5) with the outer ring (7) of the slewing ring bearing, which is connected to the vehicle chassis.

11. Drive and steering unit (1) according to one or more of claims 1 to 10, **characterized in that** the electrical connection cables of the drive motor (3) and steering motor (4) are routed through the slewing ring bearing (2) into the vehicle chassis.

12. Use of a drive and steering unit (1) according to one of claims 1 to 11 for an industrial truck.

## Revendications

1. Ensemble d'une unité d'entraînement et de commande (1) pour véhicule, notamment pour chariots élévateurs, prévu d'être monté sur un châssis de véhicule, comportant au moins un palier de couronne d'orientation (2) comprenant au moins un moteur d'entraînement (3) et au moins un étage d'engrenage, le palier de couronne d'orientation (2) étant relié au châssis de véhicule en étant orienté horizontalement,
**caractérisé en ce que**
le moteur d'entraînement (3) est disposé avec son axe de rotation et au moins un étage d'engrenage au-dessous et de manière orthogonale par rapport au palier de couronne d'orientation (2) et **en ce que** la plaque signalétique (12) du moteur d'entraînement constitue, en position couchée parallèlement au palier de couronne d'orientation (2), en même temps le couvercle supérieur de la boîte de vitesses.

2. Unité d'entraînement et de commande (1) selon la revendication 1,
**caractérisée en ce que**
les moteurs d'entraînement (3) et de commande (4) comportent une plaque signalétique de moteur commune (12) et **en ce que** la plaque signalétique de moteur (12) constitue en même temps le couvercle supérieur de la boîte de vitesses.

3. Unité d'entraînement et de commande (1) selon la revendication 1 ou 2,
**caractérisée en ce qu'**
une bague extérieure du palier de couronne d'orientation (7) est reliée au châssis de véhicule et **en ce qu'**une bague intérieure du palier de couronne d'orientation (8) est reliée à la plaque signalétique de moteur (12), ou **en ce qu'**une bague intérieure du palier de couronne d'orientation (8) est prévue comme plaque signalétique de moteur (12).

4. Unité d'entraînement et de commande (1) selon l'une des revendications 1 à 3, **caractérisée en ce que**
le moteur d'entraînement (3) est fixé par bride latéralement à côté de l'au moins un étage d'engrenage, et / ou **en ce qu'**un moteur de commande (4) est prévu à côté du moteur d'entraînement (3), en orientation verticale.

5. Unité d'entraînement et de commande (1) selon l'une des revendications 1 à 4, **caractérisée en ce que**
les moteurs d'entraînement (3) et de commande (4) sont disposés d'un côté de l'au moins un étage d'engrenage et **en ce que** la couronne mobile (10) est disposée de manière diamétralement détournée par rapport à ce dernier.

6. Unité d'entraînement et de commande (1) selon l'une des revendications 1 à 5, **caractérisée en ce qu'**
une plaque de montage est prévue entre la plaque signalétique de moteur (12) et la bague intérieure du palier de couronne d'orientation (8).

7. Unité d'entraînement et de commande (1) selon la revendication 6,
**caractérisée en ce que**
la plaque de montage est conçue pour abriter au moins un capteur pour capter un angle de commande.

8. Unité d'entraînement et de commande (1) selon l'une des revendications 1 à 7, **caractérisée en ce que**
le moteur d'entraînement (3) entraîne, via un pignon d'entraînement (35), un pignon droit (23) en tant que premier étage d'engrenage, le pignon droit (23) étant relié à un arbre d'entraînement (24) de manière immobilisée en rotation, qui, de son autre côté, présente une denture hélicoïdale (27) qui s'engrène avec une denture hélicoïdale (28) supplémentaire d'un arbre creux (29) en tant que second étage d'entraînement.

9. Unité d'entraînement et de commande (1) selon l'une ou plusieurs des revendications 1 à 8,
**caractérisée en ce que**
le second étage d'entraînement est couplé directement à la couronne mobile (10) via l'arbre creux (29).

10. Unité d'entraînement et de commande (1) selon l'une ou plusieurs des revendications 1 à 9,
**caractérisée en ce que**
le moteur de commande (4) s'engrène via un pignon (5) avec la bague extérieure du palier de couronne d'orientation (7) qui est reliée au châssis de véhicule.

11. Unité d'entraînement et de commande (1) selon l'une ou plusieurs des revendications 1 à 10,
**caractérisée en ce que**
les câbles de raccordement du moteur d'entraînement (3) et de commande sont introduits à l'intérieur du châssis de véhicule à travers le palier de couronne d'orientation (2).

12. Utilisation d'une unité d'entraînement et de commande (1) selon l'une des revendications 1 à 11 dans un chariot élévateur.
